# EUROPÄISCHE PATENTSCHRIFT

(11) **EP 1 456 837 B1**
(45) Veröffentlichungstag und Bekanntmachung des Hinweises auf die Patenterteilung: **22.03.2006**
(21) Anmeldenummer: 01988071.5
(22) Anmeldetag: 21.12.2001
(51) Int. Cl.: G10L 15/22, G10L 11/02

(54) **VERFAHREN UND VORRICHTUNG ZUR SPRACHERKENNUNG**
METHOD AND DEVICE FOR VOICE RECOGNITION
PROCEDE ET DISPOSITIF DE RECONNAISSANCE VOCALE

(43) Veröffentlichungstag der Anmeldung: 15.09.2004
(73) Patentinhaber: TELEFONAKTIEBOLAGET LM ERICSSON (publ), 164 83 Stockholm (SE)
(72) Erfinder: DOBLER, Stefan, 91077 Neunkirchen am Brand (DE)
(74) Vertreter: Meyer, Jochen
(86) Internationale Anmeldenummer: PCT/EP2001/015274
(87) Internationale Veröffentlichungsnummer: WO 2003/054856

(56) Entgegenhaltungen:
- EP-A- 1 081 683
- WO-A-89/04035
- US-A- 5 870 709
- US-A1- 2002 042 709

## Beschreibung

Die Erfindung betrifft ein Verfahren und eine Vorrichtung zur Spracherkennung. Insbesondere betrifft die Erfindung ein Verfahren gemäß dem Oberbegriff des Anspruchs 1, sowie eine Vorrichtung gemäß dem Oberbegriff des Anspruchs 10.

Verfahren zur Spracherkennung sind allgemein bekannt. So gibt es neben den Verfahren zur Einzelworterkennung auch Verfahren zur Erkennung von Wortgruppen. Eine Wortgruppe besteht aus einer Reihe von aufeinanderfolgenden Einzelwörtern. Die Einzelwörter finden sich in Bereichen von Sprache in einem Sprachsignal wieder. Diese Bereiche sind durch Pausen, das heißt Zeitintervalle ohne Sprache, welche auch als Bereiche von Nichtsprache bezeichnet werden, getrennt. Solche Pausen können Zeitintervalle von sehr kleiner, fast nicht hörbarer Dauer sein oder auch längere Zeitintervalle. Sowohl bei der Einzelworterkennung als auch bei der Wortgruppenerkennung wird jedem der Worte, wie zum Beispiel Ziffern, Buchstaben oder auch sogenannten Schlüsselwörtern, jeweils eine Referenz zugeordnet, indem jedes der Worte mit diesen im Voraus gespeicherten Referenzen verglichen wird. Zur Kontrolle der Erkennung kann dann entsprechend der Zuordnung eine akustische oder visuelle Anzeige erfolgen.

Gerade in tragbaren Endgeräten, wie zum Beispiel in Mobiltelefonen, kommen solche Spracherkennungsverfahren vermehrt zum Einsatz. Erste Verfahren zur Spracherkennung in Mobiltelefonen basierten auf der Einzelworterkennung. Dabei wird von einem Benutzer ein Wort wie z.B. <Stefan> oder <wähle> gesprochen. Diesem gesprochenen Wort wird dann in einem Mustervergleicher eine gespeicherte Referenz zugeordnet und entsprechend dieser Zuordnung erfolgt zur Kontrolle eine akustische oder visuelle Anzeige. Ist die Spracherkennung erfolgreich, das heißt bestätigt der Benutzer die wiedergegebene Referenz als die, dem gesprochenen Wort entsprechende Referenz, wird dann vom Mobiltelefon die dem Wort oder vielmehr der Referenz <Stefan> zugeordnete Rufnummer aktiviert oder die dem Wort <wähle> zugeordnete Funktion ausgeführt. Die Benutzung eines solchen Verfahrens zur Spracherkennung bietet sich dann an, wenn ein Benutzer ein Mobiltelefon beispielsweise im Freisprechbetrieb im Auto bedienen möchte. In neueren Generationen von Mobiltelefonen kommen vermehrt Spracherkennungssysteme zur Wortgruppenerkennung zum Einsatz. Ziel ist es, dass ein Benutzer eine Einrichtung, wie zum Beispiel ein Mobiltelefon ohne Beschränkungen vollständig mittels Sprachbefehlen bedienen, bzw. steuern kann.

So ist zum Beispiel aus EP 0389514 ein Verfahren zur Erkennung von Wortgruppen bekannt. Von einem Benutzer eines Mobiltelefons werden aus einer Ziffernfolge, wie zum Beispiel aus <eins-zwei-drei-vier-fünf-sechs-sieben>, die Wortgruppen <eins-zwei-drei> und <vier> und <fünf-sechs> und <sieben> mit einer variablen Anzahl von Worten dadurch gebildet, dass der Benutzer zwischen den Wortgruppen <..> Pausen mit einer im Voraus festgelegten Pausenlänge einlegt. Bei jeder Pause, deren Länge diese festgelegte Pausenlänge übersteigt, wird ein Pausensignal erzeugt. Als Folge dieses Pausensignals werden dann, die den gesprochenen Wörtern zugeordneten Referenzen dem Benutzer akustisch oder visuell angezeigt. Dadurch dass der Benutzer zwischen den Wortgruppen Pausen einer bestimmten Länge macht, hat dieser die Freiheit die Ziffern einer Telefonnummer so zu gruppieren und sich damit das Erkennungsergebnis anzeigen zu lassen, wie es seinem individuellen Redefluss entspricht. So wird er beispielsweise abhängig von seinem Umfeld, wie beispielsweise bei Umgebungsgeräuschen im Auto, Wortgruppen mit nur wenigen Wörtern bilden. Im Falle der fehlerhaften Erkennung hat er dann die Möglichkeit, zumindest die zuletzt gesprochene Wortgruppe zu korrigieren.

Unabhängig vom Umfeld wird der individuelle Redefluss eines, eher ungeübten Benutzers ein anderer sein, als der eines erfahrenen, geübten Benutzers. So ist vorstellbar, dass der ungeübte Benutzer beispielsweise eine Telefonnummer in Wortgruppen von je zwei Ziffern mit eher längeren Pausen zwischen den Wortgruppen gruppiert. Dagegen wird der erfahrene Benutzer die einzelnen Ziffern der Telefonnummer eher schneller, mit vielen Ziffern in nur wenige Wortgruppen und mit kürzeren Pausen dazwischen in das Mobiltelefon eingeben. Wird nun ein solcher, geübter Benutzer, beispielsweise ein Mobiltelefon mit dem aus EP 0389514 bekannten Verfahren benutzen und ist die im Voraus festgelegte Pausenlänge zum Auslösen des Pausensignals relativ hoch angesetzt, muss er gegebenenfalls zu lange warten bis die Anzeige bzw. die Wiedergabe der erkannten Worte erfolgt. Andererseits, wenn die im Voraus festgelegte Pausenlänge zu gering ist, wird der unerfahrene Benutzer der relativ lange Pausen zwischen den Wortgruppen einlegt, unter Umständen ein Pausensignal und damit eine Wiedergabe auslösen, obwohl er dies zu diesem Zeitpunkt nicht beabsichtigte. Das heißt sowohl der ungeübte als auch der geübte Benutzer müssen sich mit ihrem Redefluss an die Randbedingungen der Spracherkennung, wie zum Beispiel die im Voraus definierte Pausenlänge anpassen. Damit sind beide Benutzergruppen in ihrem individuellen Redefluss eingeschränkt.

Der vorliegenden Erfindung liegt daher die Aufgabe zugrunde, sowohl ein Verfahren als auch eine Vorrichtung anzugeben, die es erlauben, den Zeitpunkt der Wiedergabe der erkannten Wörter an den individuellen Redefluss des jeweiligen Benutzers anzupassen.

Die Aufgabe wird erfindungsgemäß gelöst durch ein Verfahren mit den Merkmalen des Anspruchs 1 sowie eine Vorrichtung nach Anspruch 10.

Die Erfindung beruht demnach auf dem Gedanken, dass in einem Verfahren oder einer Vorrichtung zur Erkennung von Worten und Pausen aus einem Sprachsignal, der Grenzwert bei dem eine Pause eine bestimmte Länge überschreitet, abhängig von Parametern die aus dem Sprachsignal bestimmt werden, verändert wird. Das bedeutet, dass abhängig von diesen Parametern und damit vom Redefluss des Benutzers der Grenzwert erhöht oder verringert wird und dass damit der Zeitpunkt der Wiedergabe des Ergebnisses vom Mustervergleicher entweder nach einer längeren oder einer eher kürzeren Pausenlänge erfolgt.

Der Vorteil der Erfindung besteht nun darin, dass ein Benutzer des erfindungsgemäßen Verfahrens bzw. der erfindungsgemäßen Vorrichtung durch die Wiedergabe bzw. Anzeige des Erkennungsergebnisses nicht in seinem individuellen Redefluss gehemmt wird. Vielmehr wird die Wiedergabe an das Verhalten des Benutzers, das heißt dessen Redefluss, angepasst. Dadurch wird ein Benutzer weniger oder gar nicht in seinem individuellen Redefluss gestört, da das Ergebnis der Spracherkennung zu einem Zeitpunkt wiedergegeben bzw. angezeigt wird, der durch den Redefluss des Benutzers bestimmt ist.

Vorzugsweise wird das erfindungsgemäße Verfahren in einer Reihe aufeinanderfolgender Wortgruppen für jede der Wortgruppen ausgeführt. Normalerweise wird der Benutzer beispielsweise eine Telefonnummer in mehreren Wortgruppen nacheinander sprechen, so dass es von Vorteil ist, den Grenzwert und damit den Zeitpunkt der Wiedergabe für die nachfolgenden Wortgruppen an die Erkenntnisse über den Redefluss des Benutzers zumindest aus der zuletzt gesprochenen Wortgruppe anzupassen. Mit dieser dynamischen Anpassung der Anzeige an den jeweiligen Benutzer wird beispielsweise die akustische Wiedergabe in der Pause nach der zuletzt gesprochenen Wortgruppe, also auch bevor der Benutzer die nächste Wortgruppe spricht, erfolgen. Damit wird der geübte Benutzer, der kürzere Pausen macht, nicht lange auf die Wiedergabe warten müssen. Dagegen wird der ungeübte Benutzer, der längere Pausen auch innerhalb einer Wortgruppe macht, nicht ungewollt eine Wiedergabe bekommen. Dies könnte nämlich dann eintreten, wenn die Dauer dieser längeren Pausen innerhalb der Wortgruppe den Grenzwert überschreiten.

Die erfindungsgemäße Vorrichtung lässt sich in tragbaren Endgeräten wie beispielsweise in Mobiltelefonen einsetzen. Hier wird dem Benutzer die Möglichkeit eröffnet, dass sich das Mobiltelefon seinem Redefluß angepasst. Damit kann er beispielsweise eine Telefonnummer abhängig von seiner Umgebung so in Wortgruppen aufteilen, wie er üblicherweise auch diese Telefonnummer sprechen würde.

Der Einsatz der erfindungsgemäßen Vorrichtung in einer zentralen Spracherkennungseinrichtung zur Sprachwahl innerhalb eines Telekommunikationsnetzwerkes erlaubt dem Benutzer die ihm entstehenden Verbindungskosten zu optimieren. Auch hier lässt sich der Zeitpunkt der Wiedergabe des Erkennungsergebnisses an den Redefluss eines Benutzers anpassen. Beispielsweise wird der geübte Benutzer der schnell spricht, durch die Anpassung der Anzeige des Erkennungsergebnisses an seinen Redefluss in kürzerer Zeit eine akustische Wiedergabe des Erkennungsergebnisses erhalten. Dadurch läßt sich das vollständige Sprachwahlverfahren schneller durchführen, wodurch sich für den Benutzer die Kosten für die Telefonverbindung reduzieren.

Weitere vorteilhafte Ausführungen und bevorzugte Weiterbildungen des erfindungsgemäßen Verfahrens und der erfindungsgemäßen Vorrichtung sind den Unteransprüchen zu entnehmen.

Die Erfindung wird nun anhand der Figuren näher erläutert. Es zeigt:
- Fig.1:: Blockdiagramm einer Spracherkennungseinrichtung in einem Mobiltelefon;
- Fig.2:: Suchfeld eines Mustervergleichers.

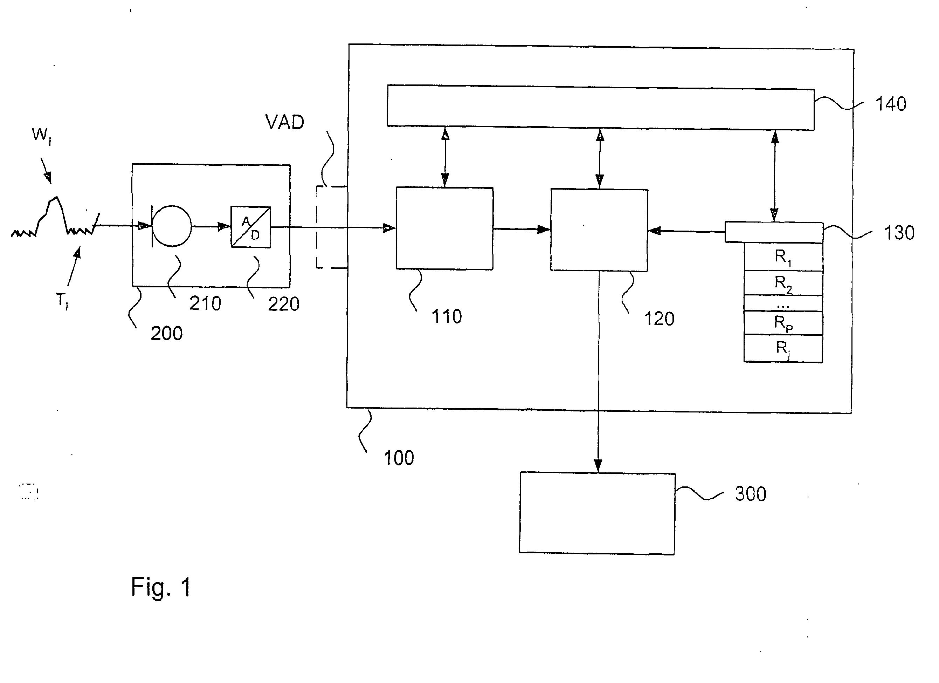

Fig.1 zeigt wesentliche Bestandteile einer Spracherekennungseinrichtung in einem Mobiltelefon. Die Vorrichtung 100 zur Erkennung von Worten und Pausen ist mit einer Eingabeeinheit 200, die ein Mikrofon 210 zur Eingabe eines Sprachsignals sowie ein Analog/Digital Wandler 220 enthält, verbunden. Die Vorrichtung 100 weist als zentrale Einheit einen Mustervergleicher 120 auf, der nach einem bekannten Spracherkennungsverfahren arbeitet. Der Mustererkenner 120 ist mit einem Vokabularspeicher 130, in dem eine endliche Anzahl N im voraus trainierter Referenzen Rⱼ=(R₁,R₂,..,Rₚ,..,R_{N}} gespeichert ist, verbunden. Des weiteren weist die Vorrichtung 100 Mittel zur Vorverarbeitung 110 auf, die das von der Eingabeeinheit 200 kommende Sprachsignal in eine parametrische Beschreibung umsetzen. Eine Steuervorrichtung 140 ist mit dem Mustervergleicher 120, dem Vokabularspeicher 130 und den Mitteln zur Vorverarbeitung 110 verbunden. Die Vorrichtung 100 ist weiterhin mit einer Ausgabeeinheit 300 verbunden, um das Ergebnis des Mustervergleichers 120 entweder akustisch oder visuell dem Benutzer des Mobiltelefons anzuzeigen. Die in Fig.1 dargestellten Mittel zur Vorverarbeitung 110, Mustererkenner 120, Vokabularspeicher 130, und Steuervorrichtung 140, die wesentlichen Funktionen innerhalb der Vorrichtung 100 entsprechen und in der Regel in Form von Algorithmen vorliegen, können in beliebiger Form zusammengefasst werden. So ist beispielsweise denkbar, dass 110, 120, 130, 140 in einem einzigen Prozessor oder dass nur 120, 130, 140 in einem Prozessor zusammengefasst sind.

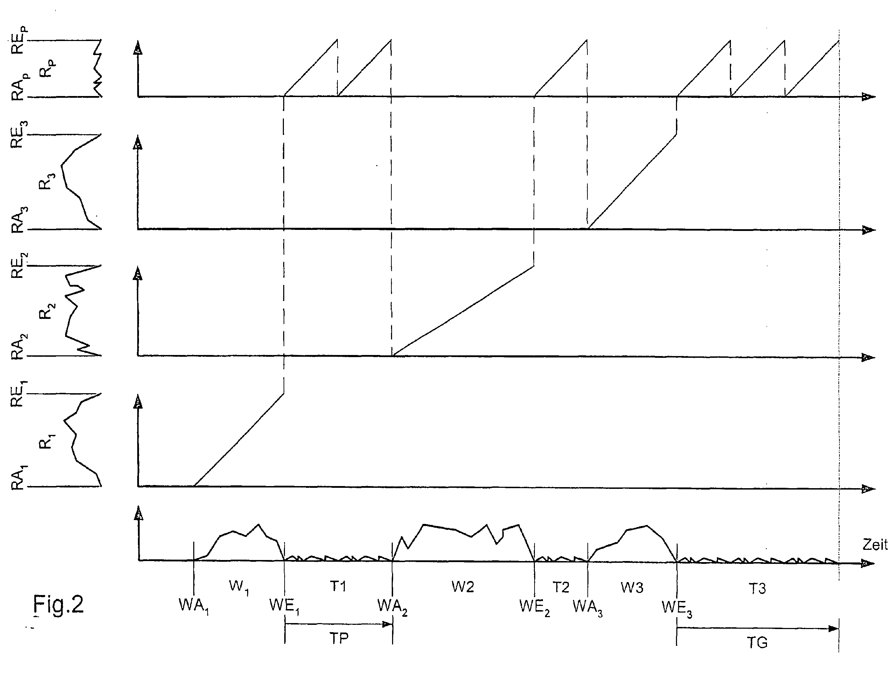

Nachfolgend soll nun eine erste Ausführungsform des erfindungsgemäßen Verfahrens zur Spracherkennung, das heißt der Erkennung von Worten und Pausen, näher beschrieben werden. Dazu ist in Fig. 2 ein Suchfeld eines Mustervergleichers 120 dargestellt. Die auf der vertikalen Achse dargestellten Referenzen Rⱼ, die im folgenden als Wortreferenzen R₁, R₂, R₃, und Pausenreferenzen Rₚ bezeichnet werden, sind üblicherweise im Voraus trainierte und dann in der Speichereinheit 120 gespeicherte Sprachmodelle. So kann beispielsweise die Wortreferenz R₁ der im Voraus trainierten Ziffer oder vielmehr dem Wort <eins>, die Wortreferenz R₂ dem Wort <zwei> und die Wortreferenz R₃ dem Wort <zweiundfünfzig> entsprechen. Die Pausenreferenz Rp stellt ein im Voraus trainiertes Modell für Nichtsprache, wie beispielsweise eine Pause einer bestimmten Länge und unter normalen Umgebungsbedingungen, dar. Die Wortreferenzen R₁, R₂, R₃ können sprecherabhängig oder sprecherunabhängig sein und werden nach allgemein bekannten Verfahren erzeugt. Dabei geben die gespeicherten Wortreferenzen R₁, R₂, R₃, mit Wortanfang RA₁, RA₂, RA₃ und Wortende RE₁, RE₂, RE₃, im Falle der sprecherunabhängigen Erkennung, in etwa das Sprachverhalten eines durchschnittlichen Sprechers wieder. Dies ist im wesentlichen bestimmt durch die Sprechgeschwindigkeit oder die Artikulation. Aus dem Sprachsignal, das über die Eingabeeinheit 200 eingegeben wird, werden Parameter ermittelt. Dazu sind Mittel zur Vorverarbeitung 110 vorgesehen, welche das durch den A/D Wandler 220 digitalisierte Sprachsignal in sogenannte Merkmalsvektoren umwandelt. Durch kontinuierlichen Vergleich dieser Merkmalsvektoren mit den gespeicherten Wortreferenzen R₁, R₂, R₃, und der Pausenreferenz Rₚ im Mustervergleicher 120 wird eine zeitliche Segmentierung des Sprachsignals in Bereiche mit Sprache und Bereiche mit Nichtsprache erreicht, die durch die Parameter charakterisiert werden. Das bedeutet das die Parameter beispielsweise die Übergänge zwischen Bereichen mit Sprache und Bereichen mit Nichtsprache bezeichnen. Diese Bereiche von Sprache und Nichtsprache, des in Fig. 2 auf der horizontalen Achse dargestellten Sprachsignals, lassen sich beispielsweise unterscheiden durch die Energie, die Amplitude oder die spektralen Eigenschaften des Sprachsignals in diesen Bereichen. So weisen die Bereiche mit Sprache, also beispielsweise die Worte, Ziffern, Buchstaben oder Schlüsselwörter, welche im Nachfolgenden zur Vereinfachung immer als Worte Wᵢ={W₁,W₂,..} bezeichnet werden, entsprechend eine größere Energie auf als Bereiche von Nichtsprache, das heißt die Bereiche von Pause Tᵢ={T₁,T₂,..}. Diese Annahme wird immer dann zutreffen, wenn das Verfahren beispielsweise in Umgebungen, wie Büroräumen, verwendet wird. Dagegen wird die Unterscheidung zwischen den verschiedenen Bereichen des Sprachsignals mittels derer spektralen Eigenschaften dann bevorzugt, wenn das Verfahren beispielsweise im Auto benutzt wird. Denn hier ist in der Regel auch bei Nichtsprache die Energie aufgrund des Hintergrundrauschens so hoch, dass mittels der Energie des Sprachsignals keine Unterscheidung in Bereiche mit Sprache und Nichtsprache getroffen werden kann.

Dadurch ergibt sich das der Zeitpunkt des Übergangs zwischen einem Bereich mit Nichtsprache und einem Bereich mit Sprache den Wortanfang WAᵢ und der Übergang zwischen Sprache zu Nichtsprache das Wortende WEᵢ des Wortes Wᵢ kennzeichnet. Durch den Mustervergleich, und unter Zuhilfenahme einer Zeitanpassung werden dann den Worten Wᵢ nach einem bekannten Verfahren, wie es beispielsweise aus Ney,H.: "The use of a one stage dynamic programming algorithm for connected word recognition", IEEE Transactions, Vol. ASSP-32, no2, page 263-271, 1984 bekannt ist, Referenzen Rⱼ zugeordnet. So wird zum Beispiel einem Bereich von Sprache, der dem gesprochenen Wort W₁ <eins> entspricht, die gespeicherte Wortreferenz R₁ <eins> zugeordnet und einem weiteren Bereich von Sprache der dem gesprochene Wort <zweiundfünfzig> entspricht die Referenz <zweiundfünfzig>. Dadurch, dass die gespeicherten Wortreferenzen R₁, R₂, R₃ das Sprachverhalten eines durchschnittlichen Benutzers repräsentieren, kann durch Vergleich des Zeitintervalls (WE₁ - WA₁) eines gesprochenen Wortes W₁ mit dem Zeitintervall (RE₁ - RA₁) der zugeordneten Wortreferenz R₁, der Benutzer als geübter oder eher ungeübter Sprecher charakterisiert werden. Da auch bei bereits bekannten Erkennungsverfahren im Mustervergleicher 120 alle Parameter sowohl der gesprochenen Worte Wᵢ als auch der gespeicherten Referenzen Rⱼ verarbeitet werden und auch die Zeitintervalle für die notwendige Zeitanpassung im Mustervergleicher 120 bestimmt werden, lässt sich das erfindungsgemäße Verfahren besonders einfach in bereits bekannte Vorrichtungen implementieren. Damit wird besonders einfach, ohne wesentlichen Aufwand, eine Anpassung des Zeitpunktes der Wiedergabe an den Redefluss des Benutzers erreicht. Das Ergebnis des Mustervergleichers 120 wird an die Steuervorrichtung 140 weitergegeben, welche dann in Abhängigkeit von dem oben beschriebenen Verhältnis von Zeitintervall des gesprochenen Wortes und dem Zeitintervall der zugeordneten gespeicherten Referenz den Grenzwert TG, und damit den Zeitpunkt der Wiedergabe verändert. Das heißt, dass der Grenzwert TG erhöht wird, wenn zumindest für ein Wort W₁, W₂, W₃ aus der Wortgruppe das Zeitintervall zwischen dessen Wortanfang und Wortende größer als das Zeitintervall zwischen Wortanfang und Wortende der, dem Wort zugeordneten, Referenz Rⱼ ist. Entsprechend wird der Grenzwert erniedrigt, wenn zumindest für ein Wort W₁, W₂, W₃ aus der Wortgruppe das Zeitintervall zwischen Wortanfang und Wortende kleiner als das Zeitintervall zwischen Wortanfang und Wortende der zugeordneten Referenz Rⱼ ist.

Nachfolgend wird eine zweite Ausführungsform des erfindungsgemäßen Verfahrens näher beschrieben. Bisher wurde den Bereichen mit Sprache aus dem Sprachsignal Worte Wᵢ zugeordnet. Entsprechend lassen sich die Bereiche mit Nichtsprache aus den zwischen den Worten Wᵢ befindlichen Pausen Tᵢ bestimmen. In solchen Pausen T₁, T₂, T₃ wird unter normalen Bedingungen, wie sie zum Beispiel in Büroräumen vorliegen, die Energie des Sprachsignals sehr klein sein. Diese Energie wird im wesentlichen durch Hintergrundrauschen bestimmt sein. Damit erhält man wie bereits beschrieben, eine zeitliche Segmentierung des Sprachsignals in Bereiche mit Sprache und solchen mit Nichtsprache. Mit Hilfe der dadurch ermittelten Parameter des Sprachsignals, hier sind das die Wortanfänge WAᵢ und Wortenden WEᵢ werden dann wie bereits beschrieben, den Worten Wᵢ entsprechende Referenzen Rⱼ zugeordnet und damit beispielsweise auch ein Zeitintervall T₂ von Nichtsprache aus dem Sprachsignal ermittelt, welches durch das Wortende WE₂ des letzten Wortes W₂ und dem Wortanfang WA₃ des nächsten Wortes W₃ bestimmt ist. Der Grenzwert TG wird dann erhöht, wenn zumindest für eine Pause Tᵢ aus der Wortgruppe das Zeitintervall zwischen dem Wortende eines Wortes und dem Wortanfang des nachfolgenden Wortes größer als ein Pausenzeitintervall TP ist. Entsprechend wird der Grenzwert TG erniedrigt, wenn zumindest für eine Pause Tᵢ aus der Wortgruppe das Zeitintervall zwischen dem Wortende eines Wortes und dem Wortanfang des nachfolgenden Wortes kleiner als ein Pausenzeitintervall TP ist. Dabei ist zu beachten, dass die letzte Pause, in Fig.2 ist das die Pause T₃, nicht für das erfindungsgemäße Verfahren herangezogen wird, da in der Regel TG immer größere oder höchstens gleich TP sein kann. Damit würde innerhalb einer Wortgruppe immer eine Pause größer als TP ermittelt werden, und der Grenzwert TG entsprechend immer weiter erhöht werden. Da sich die Bereiche von Nichtsprache, wie oben bereits erwähnt, entweder durch die geringe Energie oder durch besondere spektralen Eigenschaften des Sprachsignals charakterisieren lassen, ist es möglich beispielsweise im Voraus spezielle Pausenreferenzen Rp mit Wortanfang RAₚ und Wortende REₚ zu erzeugen, die einer Pause mit einer Länge und unter normalen Umgebungsgeräuschen entspricht. Diese Pausenreferenz Rp kann wie die Wortrefernzen auch in der Speichereinheit 130 gespeichert werden. Weiterhin sind sogenannte Pausenfüller, nicht dargestellt, wie <ähhh> oder <mmmmh> bekannt, die auch als Referenzen Rⱼ im Vokabularspeicher 130 gespeichert werden können. Diese können dann auch zur Detektion von Bereichen mit Nichtsprache verwenden werden. Dazu werden im Mustervergleicher 120 während der Erkennung den Bereichen mit Nichtsprache T₁, T₂, T₃ des Sprachsignals solche gespeicherten Pausenreferenzen Rp oder Pausenfüllerreferenzen zugeordnet. Die Länge, bzw. Dauer, der einzelnen Pausen T₁, T₂, T₃ wird dann dadurch ermitteln, dass über die Dauer der Pause Tᵢ die Anzahl der Zuordnungen zu den oben beschriebenen Referenzen für Pause Rₚ oder Pausenfüller ermittelt wird. Das Zeitintervall jeder der Pausen T₁, T₂, T₃ kann dann sehr einfach durch die jeweilige Anzahl von zugeordneten Pausenreferenzen Rp und/oder Pausenfüllerreferenzen bestimmt werden. Die hier beschriebene Ausführungsform des erfindungsgemäßen Verfahrens lässt sich besonders einfach in vorhandene Spracherkennungseinrichtungen implementieren, da das prinzipielle Verfahren der Zuordnung von Pausenreferenzen Rₚ zu Pausenintervallen schon in bereits bekannten Spracherkennern benutzt wird um den Zeitpunkt zu ermitteln, wann eine Pause den Grenzwert TG überschreitet. Mit dem beschriebenen erfindungsgemäßen Verfahren lässt sich der Benutzer sehr einfach als geübter oder eher ungeübter Sprecher charakterisiert, womit dann eine Anpassung des Grenzwertes TG möglich ist und damit eine Anpassung an den Redefluss des Benutzers erfolgt.

In einer weiteren alternativen Ausführungsform der Erfindung ist in der Verbindung zwischen A/D Wandler 220 und den Mitteln zur Vorverarbeitung 110 ein Detektor VAD, in Fig. 1 gestrichelt dargestellt, zur Detektion der Parameter des Sprachsignals, wie die Übergänge zwischen Bereichen von Sprache und Nichtsprache vorgesehen. Der Detektor VAD ist mit der Steuervorrichtung 140 verbunden. Der Detektor VAD detektiert, durch die kontinuierliche Bestimmung der Signalenergie des Sprachsignals direkt aus dem Sprachsignal die Parameter, also die Zeitpunkte der Übergänge zwischen Sprache und Nichtsprache. Der Detektor VAD ist in Form von bereits bekannten Algorithmen realisiert und kann mit der Vorrichtung 100 eine Einheit bilden. Mittels des Detektors VAD und der Steuereinrichtung 140 wird eine Vorsegmentierung des Sprachsignals in Bereiche mit Sprache und Nichtsprache erreicht. Diese vorsegmentierte Bereiche der Nichtsprache werden dann, beispielsweise in der Steuereinrichtung 140 mit einem festgelegten Pausenzeitintervall TP verglichen und entsprechend dem Verhältnis zwischen Pausenzeitintervall TP und der Dauer der Pause wird der Grenzwert TG zur Wiedergabe entsprechend dem bereits beschriebenen Verfahren angepasst. Dadurch läßt sich die Anpassung des Grenzwertes TG ohne den nachfolgenden Mustererkenner realisieren.

Für den Fachmann ergibt sich in naheliegender Weise, dass das erfindungsgemäße Verfahren nicht durch die beschriebenen Ausführungen begrenzt ist. Vielmehr sind auch Ausführungen mit umfaßt, bei denen nicht nur die Wortlänge von einem Wort mit einer Referenz verglichen wird, sondern vielmehr kann beispielsweise auch eine statistische Mittelung oder eine mediane Filterung oder ein Mittelung durch einen gleitenden Mittelwert über zwei oder mehrere Worte der Wortgruppe mit einer statistischen Mittelung oder einer medianen Filterung oder einem gleitenden Mittelwert über zwei oder mehrere Referenzen verglichen werden, und dann entsprechend diesem Verhältnis der Grenzwert TG angepasst werden. Dies führt zu einer noch stabileren, gleichmäßigeren Anpassung des Grenzwertes TG und damit der Wiedergabe an die Sprechgewohnheiten des Benutzers. Die gleichen Überlegungen lassen sich für die anderen beschriebenen Ausführungsformen entsprechend anwenden. Weiterhin ist nicht dargestellt und beschrieben, da dies ohne weiteres für einen Fachmann erkennbar ist, dass bei einer zentralen Spracherkennungseinrichtung mit einer Vorrichtung 100 zur Erkennung von Worten und Pausen für ein Telekommunikationsnetzwerk die Vorrichtung 100 vorzugsweise in einer zentralen Einheit des Telekommunikationsnetzwerkes vorgesehen ist, und die Eingabeeinheit 200 und die Ausgabeeinheit 300 die Netzwerkverbindung zwischen dieser zentralen Einheit und einem Endgerät eines Benutzers darstellen.

## Patentansprüche

1. Verfahren zur Erkennung von Worten und Pausen aus einem Sprachsignal, wobei
- die in einer Reihe gesprochenen Worte (Wᵢ) und Pausen (Tᵢ) als zu einer Wortgruppe gehörend zusammengefasst werden, sobald eine der Pausen (Tᵢ) einen Grenzwert (TG) überschreitet,
- dem Sprachsignal der Wortgruppe gespeicherte Referenzen (Rⱼ) zugeordnet werden, und
- nach Überschreiten des Grenzwertes (TG) eine Anzeige des Ergebnisses der Zuordnung erfolgt
**dadurch gekennzeichnet, dass**
- Parameter aus dem Sprachsignal bestimmt werden, die Zeitpunkten der Übergänge zwischen Bereichen mit Sprache und Nichtsprache entsprechen und
- der Grenzwert (TG) abhängig von diesen Parametern verändert wird.

2. Verfahren nach Anspruch 1
**dadurch gekennzeichnet, dass**
- die Zeitpunkte der Übergänge Wortanfang (WAᵢ) und Wortende (WEᵢ) der Worte (Wᵢ) der Wortgruppe sind.

3. Verfahren nach Anspruch 1 - 2
**dadurch gekennzeichnet, dass**
- Parameter der Referenzen (Rⱼ) der Wortanfang (RAⱼ) und das Wortende (REⱼ) der gespeicherten Referenzen (Rⱼ) sind.

4. Verfahren nach Anspruch 3
**dadurch gekennzeichnet, dass**
- der Grenzwert (TG) erhöht wird, wenn zumindest für ein Wort (Wᵢ) aus der Wortgruppe das Zeitintervall zwischen Wortanfang (WAᵢ) und Wortende (WEᵢ) größer als das Zeitintervall zwischen Wortanfang (RAⱼ) und Wortende (REⱼ) der zugeordneten Referenz (Rⱼ) ist, und
- der Grenzwert (TG) erniedrigt wird, wenn zumindest für ein Wort (Wᵢ) aus der Wortgruppe das Zeitintervall zwischen Wortanfang (WAᵢ) und Wortende (WEᵢ) kleiner als das Zeitintervall zwischen Wortanfang (RAⱼ) und Wortende (REⱼ) der zugeordneten Referenz (Rⱼ) ist.

5. Verfahren nach Anspruch 2
**dadurch gekennzeichnet, dass**
- der Grenzwert (TG) erhöht wird, wenn zumindest für eine Pause (Tᵢ) aus der Wortgruppe das Zeitintervall zwischen dem Wortende (WEᵢ) eines Wortes (Wᵢ) und dem Wortanfang (WAᵢ₊₁) des nachfolgenden Wortes (Wᵢ₊₁) größer als ein Pausenzeitintervall (TP) ist, und
- der Grenzwert (TG) erniedrigt wird, wenn zumindest für eine Pause (Tᵢ) aus der Wortgruppe das Zeitintervall zwischen dem Wortende (WEᵢ) eines Wortes (Wᵢ) und dem Wortanfang (WAᵢ₊₁) des nachfolgenden Wortes (Wᵢ₊₁) kleiner als ein Pausenzeitintervall (TP) ist.

6. Verfahren nach Anspruch 5
**dadurch gekennzeichnet, dass**
- das Pausenzeitintervall (TP) ein Vielfaches eines Referenzpausenmodels (Rp) ist, wobei das Referenzpausenmodel (Rp) bestimmt ist durch die Parameter Wortanfang (RAⱼ) und Wortende (REⱼ) einer gespeicherten Referenz (Rⱼ).

7. Verfahren nach Anspruch 1-6
**dadurch gekennzeichnet, dass**
- die Zeitpunkte der Übergänge Pausenanfang (TAᵢ) und Pausenende (TEᵢ) der Pausen (Tᵢ) der Wortgruppe sind.

8. Verfahren nach Anspruch 7
**dadurch gekennzeichnet, dass**
- der Grenzwert (TG) erhöht wird, wenn zumindest für eine Pause (Tᵢ) aus der Wortgruppe das Zeitintervall zwischen dem Pausenanfang (TAᵢ) und dem Pausenende (TEᵢ) größer als ein Pausenzeitintervall (TP) ist, und
- der Grenzwert (TG) erniedrigt wird, wenn zumindest für eine Pause (Tᵢ) aus der Wortgruppe das Zeitintervall zwischen dem Pausenanfang (TAᵢ) und dem Pausenende (TEᵢ) kleiner als ein Pausenzeitintervall (TP) ist.

9. Verfahren zur Erkennung von Worten und Pausen nach einem der Ansprüche 1-8
**dadurch gekennzeichnet, dass**
- in einer Reihe von aufeinanderfolgenden Wortgruppen für jede der Wortgruppen das Verfahren ausgeführt wird.

10. Vorrichtung zur Erkennung von Worten und Pausen aus einem Sprachsignal, wobei die Worte als zu einer Wortgruppe gehörend zusammengefasst werden, sobald eine der Pausen einen zeitlichen Grenzwert (TG) überschreitet; mit einem Mustervergleicher (120) der vorgesehen ist, dem Sprachsignal der Wortgruppe zumindest eine, der in einer Speichereinheit (130) gespeicherten Referenzen zuzuordnen und der mit einer Eingabeeinheit (200) zur Eingabe des Sprachsignals und einer Ausgabeeinheit (300) zur Anzeige des Ergebnisses der Zuordnung verbindbar ist
**dadurch gekennzeichnet, daß**
eine Steuervorrichtung (140) vorgesehen ist, den Grenzwert (TG) abhängig von Parametern des Sprachsignals zu verändern, wobei die Parameter den Zeitpunkten der Übergänge zwischen Bereichen mit Sprache und Nichtsprache entsprechen.

11. Vorrichtung nach Anspruch 10
**dadurch gekennzeichnet, daß**
Mittel zur Vorverarbeitung (110) vorgesehen sind, die als Sprachsignal in eine Eingabeeinheit (200) eingegebenen Worte in eine parametrische Beschreibung der Worte zur Eingabe in den Mustervergleicher (120) umzuwandeln.

12. Vorrichtung nach Anspruch 10 oder 11
**dadurch gekennzeichnet, dass**
- der Mustervergleicher (120) dem Sprachsignal Referenzen zuordnet, indem er die Parameter (WAᵢ,WEᵢ) der gesprochenen Worte (Wᵢ) mit Parametern (RAⱼ,REⱼ) der Referenzen (Rⱼ) vergleicht und
- die Steuervorrichtung (140) den Grenzwert (TG) abhängig von dem Verhältnis zwischen den Parametern zumindest eines der gesprochenen Worte und den Parametern der zugeordneten Referenz verändert.

13. Vorrichtung nach Anspruch 10-12
**dadurch gekennzeichnet, dass**
- ein Detektor VAD vorgesehen ist, im Sprachsignal die Parameter festzustellen, die den Zeitpunkten der Übergänge zwischen Bereichen mit Sprache und Nichtsprache entsprechen.

14. Vorrichtung nach Anspruch 13 **dadurch gekennzeichnet, dass**
- die Steuervorrichtung (140) aus den Parametern des Sprachsignals Bereiche als Pausen ermittelt und den Grenzwert (TG) abhängig von dem Verhältnis zwischen zumindest einer der Pausen und einer in der Steuervorrichtung gespeicherten Pausenzeitintervalle (TP) verändert.

15. Tragbares Endgerät mit einer Vorrichtung nach einem der Ansprüche 10-14.

16. Tragbares Endgerät nach Anspruch 15, wobei das tragbare Endgerät ein Mobiltelefon ist.

17. Zentrale Spracherkennungseinrichtung für ein Telekommunikationsnetzwerk mit einer Vorrichtung nach einem der Ansprüche 10-14.

## Claims

1. Method for the recognition of words and pauses from a voice signal, wherein
- the consecutively spoken words (Wᵢ) and pauses (Tᵢ) are combined as to be appertaining to a word group as soon as one of the pauses (Tᵢ) exceeds a limit value (TG),
- stored references (Rⱼ) are allocated to the voice signal of the word group, and
- an indication of the result of the allocation is effected after the limit value (TG) has been exceeded,
**characterized in that**
- parameters corresponding to the moments of the transitions between ranges with voice and non-voice are determined from the voice signal, and
- the limit value (TG) is changed in dependence on said parameters.

2. Method according to claim 1,
**characterized in that**
- the moments of the transitions are the word beginning (WAᵢ) and the word end (WEᵢ) of the words (Wᵢ) of the word group.

3. Method according to claim 1 and 2,
**characterized in that**
- parameters of the references (Rⱼ) are the word beginning (RAⱼ) and the word end (REⱼ) of the stored references (Rⱼ).

4. Method according to claim 3,
**characterized in that**
- the limit value (TG) is increased, if at least for one word (Wᵢ) from the word group the time interval between the word beginning (WAᵢ) and the word end (WEᵢ) is longer than the time interval between the word beginning (RAⱼ) and the word end (REⱼ) of the allocated reference (Rⱼ), and
- the limit value (TG) is reduced, if at least for one word (Wᵢ) from the word group the time interval between the word beginning (WAᵢ) and the word end (WEᵢ) is shorter than the time interval between the word beginning (RAⱼ) and the word end (REⱼ) of the allocated reference (Rⱼ).

5. Method according to claim 2,
**characterized in that**
- the limit value (TG) is increased, if at least for one pause (Tᵢ) from the word group the time interval between the word end (WEᵢ) of a word (Wᵢ) and the word beginning (WAᵢ₊₁) of the subsequent word (Wᵢ₊₁) is longer than a pause time interval (TP), and
- the limit value (TG) is reduced, if at least for one pause (Tᵢ) from the word group the time interval between the word end (WEᵢ) of a word (Wᵢ) and the word beginning (WAᵢ₊₁) of the subsequent word (Wᵢ₊₁) is shorter than a pause time interval (TP).

6. Method according to claim 5,
**characterized in that**
- the pause time interval (TP) is a multiple of a reference pause model (R_{P}), wherein the reference pause model (R_{P}) is determined by the parameters word beginning (RAⱼ) and word end (REⱼ) of a stored reference (Rⱼ).

7. Method according to claim 1 to 6,
**characterized in that**
- the moments of the transitions are the pause beginning (TAᵢ) and the pause end (TEᵢ) of the pauses (Tᵢ) of the word group.

8. Method according to claim 7,
**characterized in that**
- the limit value (TG) is increased, if at least for one pause (Tᵢ) from the word group the time interval between the pause beginning (TAᵢ) and the pause end (TEᵢ) is longer than a pause time interval (TP), and
- the limit value (TG) is reduced, if at least for one pause (Tᵢ) from the word group the time interval between the pause beginning (TAᵢ) and the pause end (TEᵢ) is shorter than a pause time interval (TP).

9. Method for the recognition of words and pauses according to one of claims 1 to 8,
**characterized in that**
- in a number of consecutive word groups the method is executed for each of the word groups.

10. Device for the recognition of words and pauses from a voice signal, wherein the words are combined as to be appertaining to a word group as soon as one of the pauses exceeds a limit value (TG), comprising a pattern comparator (120) provided for allocating at least one of the references stored in a memory unit (130) to the voice signal of the word group and the pattern comparator (120) being connectable with an input unit (200) for inputting the voice signal, and an output unit (300) for indicating the result of the allocation,
**characterized in that**
a control means (140) is provided to change the limit value (TG) in dependence on parameters of the voice signal, wherein the parameters correspond to the moments of the transitions between ranges with voice and non-voice.

11. Device according to claim 10,
**characterized in that**
pre-processing means (110) are provided to convert the words inputted as voice signal into an input unit (200) into a parametric description of the words for inputting the same into the pattern comparator (120).

12. Device according to claim 10 or 11,
**characterized in that**
- the pattern comparator (120) allocates references to the voice signal by comparing the parameters (WAᵢ, WEᵢ) of the spoken words (Wᵢ) with parameters (RAⱼ, REⱼ) of the references (Rⱼ), and
- the control means (140) changes the limit value (TG) in dependence on the relation between the parameters of at least of one of the spoken words and the parameters of the allocated reference.

13. Device according to claims 10 to 12,
**characterized in that**
a detector (VAD) is provided to detect the parameters in the voice signal, which correspond to the moments of the transitions between ranges with voice and non-voice.

14. Device according to claim 13,
**characterized in that**
- the control means (140) detects ranges as pauses from the parameters of the voice signal and changes the limit value (TG) in dependence on the relation between at least one of the pauses and one of the pause time intervals (TP) stored in the control means.

15. Portable terminal comprising a device according to one of claims 10 to 14.

16. Portable terminal according to claim 15, wherein the portable terminal is a mobile phone.

17. Central speech recognition device for a telecommunication network comprising a device according to one of claims 10 to 14.

## Revendications

1. Procédé de reconnaissance de mots et de pauses dans un signal vocal, dans lequel
- les mots (Wᵢ) et pauses (Tᵢ) énoncés en une séquence sont assemblés comme appartenant à un groupe de mots, dès que une des pauses (Tᵢ) dépasse une valeur limite (TG),
- des références (Rⱼ) mémorisées sont affectées au signal vocal du groupe de mots, et
- lorsque la valeur limite (TG) est dépassée, un affichage du résultat de l'affectation a lieu
**caractérisé en ce que**
- des paramètres sont déterminés à partir du signal vocal, lesquels correspondent à des moments de transition entre des portions comportant du discours et des portions ne comportant pas de discours et
- la valeur limite (TG) est modifiée en fonction de ces paramètres.

2. Procédé selon la revendication 1,
**caractérisé en ce que**
- les moments de transition sont le début de mot (WAᵢ) et la fin de mot (WEᵢ) des mots (Wᵢ) du groupe de mots.

3. Procédé selon les revendications 1 et 2,
**caractérisé en ce que**
- les paramètres des références (Rj) sont le début de mot (RAⱼ) et la fin de mot (REⱼ) des références mémorisées (Rj).

4. Procédé selon la revendication 3,
**caractérisé en ce que**
- la valeur limite (TG) augmente lorsque, pour au moins un mot (Wᵢ) du groupe de mots, l'intervalle de temps entre le début de mot (WAᵢ) et la fin de mot (WEᵢ) est plus grand que l'intervalle de temps entre le début de mot (RAⱼ) et la fin de mot (REⱼ) de la référence (Rj) affectée, et
- la valeur limite (TG) diminue, lorsque, pour au moins un mot (Wᵢ) du groupe de mots, l'intervalle de temps entre le début de mot (WAᵢ) et la fin de mot (WEᵢ) est plus petit que l'intervalle de temps entre le début de mot (RAⱼ) et la fin de mot (REⱼ) de la référence (Rj) affectée.

5. Procédé selon la revendication 2,
**caractérisé en ce que**
- la valeur limite (TG) augmente, lorsque, pour au moins une pause (Tᵢ) du groupe de mots, l'intervalle de temps entre la fin de mot (WEᵢ) d'un mot (Wᵢ) et le début de mot (WAᵢ+1) du mot suivant (Wᵢ+1) est plus grand qu'un intervalle de temps de pause (TP), et
- la valeur limite (TG) diminue, lorsque, pour au moins une pause (Tᵢ) du groupe de mots, l'intervalle de temps entre la fin de mot (WEᵢ) d'un mot (Wᵢ) et le début de mot (WAᵢ+1) du mot suivant (Wᵢ+1) est plus petit qu'un intervalle de temps de pause (TP).

6. Procédé selon la revendication 5,
**caractérisé en ce que**
- l'intervalle de temps de pause (TP) est un multiple d'un modèle de pause de référence (Rp), moyennant quoi le modèle de pause de référence (Rp) est déterminé par le paramètre de début de mot (RAⱼ) et de fin de mot (REⱼ) d'une référence mémorisée (Rj).

7. Procédé selon les revendications 1 à 6,
**caractérisé en ce que**
- les moments de transition sont le début de pause (TAᵢ) et la fin de pause (TEᵢ) des pauses (Tᵢ) du groupe de mots.

8. Procédé selon la revendication 7,
**caractérisé en ce que**
- la valeur limite (TG) augmente, lorsque, pour au moins une pause (Ti) du groupe de mots, l'intervalle de temps entre le début de pause (TAi) et la fin de pause (TEi) est plus grand qu'un intervalle de temps de pause (TP), et
- la valeur limite (TG) diminue, lorsque, pour au moins une pause (Ti) du groupe de mots, l'intervalle de temps entre le début de pause (TAᵢ) et la fin de pause (TEᵢ) est plus petit qu'un intervalle de temps de pause (TP).

9. Procédé de reconnaissance de mots et de pauses selon une des revendications 1 à 8,
**caractérisé en ce que**
- dans une séquence de groupes de mots se suivant, le procédé est mis en oeuvre pour chaque groupe de mots.

10. Dispositif de reconnaissance de mots et de pauses dans un signal vocal, dans lequel les mots sont assemblés comme appartenant à un groupe de mots, dès qu'une des pauses dépasse une valeur limite temporelle (TG) ; comportant un comparateur de modèle (120) qui est prévu pour affecter au signal vocal du groupe de mots au moins une référence mémorisée dans une unité de mémoire (130) et qui peut être relié à une unité d'entrée (200) pour entrer le signal vocal et à une unité de sortie (300) pour afficher le résultat de l'affectation,
**caractérisé en ce que**
un dispositif de commande (140) est prévu, afin de modifier la valeur limite (TG) en fonction de paramètres du signal vocal, moyennant quoi les paramètres correspondent aux moments de transition entre des portions comportant du discours et des portions ne comportant pas de discours.

11. Dispositif selon la revendication 10,
**caractérisé en ce que**
des moyens de prétraitement (110) sont prévus, lesquels convertissent des mots entrés comme des signaux vocaux dans une unité d'entrée (200) en une description paramétrique des mots afin de les entrer dans le comparateur de modèle (120).

12. Dispositif selon la revendication 10 ou 11,
**caractérisé en ce que**
- le comparateur de modèle (120) affecte au signal vocal des références, en comparant les paramètres (WAi, WEi) des mots (Wi) énoncés avec des paramètres (RAj, Rej) des références (Rj) et
- le dispositif de commande (140) modifie la valeur limite (TG) en fonction du rapport entre les paramètres d'au moins un des mots énoncés et les paramètres de la référence associée.

13. Dispositif selon les revendications 10 à 12,
**caractérisé en ce que**
- un détecteur VAD est prévu, afin d'établir dans le signal vocal les paramètres, qui correspondent aux moments de transition entre les portions comportant du discours et les portions ne comportant pas de discours.

14. Dispositif selon la revendication 13,
**caractérisé en ce que**
- le dispositif de commande (140) détermine à partir des paramètres du signal vocal des portions étant des pauses et modifie la valeur limite (TG) en fonction du rapport entre au moins une des pauses et un des intervalles de temps de pause (TP) mémorisés dans le dispositif de commande.

15. Terminal portable comportant un dispositif selon une des revendications 10 à 14.

16. Terminal portable selon la revendication 15, moyennant quoi le terminal portable est un téléphone mobile.

17. Dispositif central de reconnaissance vocale d'un réseau de télécommunication, comportant un dispositif selon une des revendications 10 à 14.
